(19) Europäisches Patentamt
European Patent Office
Office européen des brevets

(11) **EP 4 697 672 A1**

(12) **EUROPEAN PATENT APPLICATION**
published in accordance with Art. 153(4) EPC

(43) Date of publication:
**18.02.2026 Bulletin 2026/08**

(21) Application number: **23932844.6**

(22) Date of filing: **18.12.2023**

(51) International Patent Classification (IPC):
***H04L 61/2503*** (2022.01)

(52) Cooperative Patent Classification (CPC):
**H04L 61/2503; H04L 61/256; H04L 61/2592;
H04L 67/141**

(86) International application number:
**PCT/CN2023/139474**

(87) International publication number:
**WO 2024/212573 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.04.2023 CN 202310411853**

(71) Applicant: **Zhejiang Uniview Technologies Co.,
Ltd.
Hangzhou, Zhejiang 310051 (CN)**

(72) Inventor: **HUANG, Cheng
Hangzhou, Zhejiang 310051 (CN)**

(74) Representative: **De Ros, Alberto et al
Società Italiana Brevetti S.p.A.
Via G. Carducci 8
20123 Milano (IT)**

(54) **COMMUNICATION CONNECTION METHOD AND APPARATUS, ELECTRONIC DEVICE, SYSTEM, AND READABLE STORAGE MEDIUM**

(57) The present disclosure relates to the technical field of communications, and provided thereby are a communication connection method and apparatus, an electronic device, a system, and a readable storage medium. The method comprises: on the basis of a first communication connection request initiated by a first client terminal, dividing the quantity of first idle ports of a network connection device corresponding to a local device into a quantity of first selected ports and a quantity of first reserved ports; on the basis of the quantity of first selected ports, executing a port guessing operation, and when the port guessing is successful, building a first communication connection between the first client terminal and the local device; and when the port guessing fails, building a second communication connection between the first client terminal and the local device on the basis of the quantity of first reserved ports.

Divide a first idle port number of a network connection device corresponding to a local device into a first selected port number and a first reserved port number based on a first communication connection request initiated by a first client terminal — 101

Perform a port guessing operation based on the first selected port number; wherein in case of a successful port guessing, a first communication connection is established between the first client terminal and the local device — 102

In case of a failed port guessing, a second communication connection is established between the first client terminal and the local device based on the first reserved port number — 103

FIG. 1

**Description**

CROSS-REFERENCES TO RELATED APPLICATIONS

The present application claims priority to the Chinese patent application No. 202310411853.3, filed on April 14, 2023, entitled "Communication connection method and apparatus, electronic device, system, and readable storage medium", and all of which is incorporated herein by reference in its entirety.

FIELD

The present application relates to the field of communications, and in particular to communication connection methods, an apparatus, an electronic device, a system, and a readable storage medium.

BACKGROUND

At present, by applying NAT (Network Address Translation) traversal technology to the access solution of IoT (internet of things) terminals, different private network addresses are mapped to different ports of the same public network address, and multiple hosts in the intranet may use the same IP (Internet Protocol) address for internet connection, to solve the problem of difficulty in physical network terminal access due to the shortage of network addresses and the growing routing table.

Due to the different types of NAT networking used by different hosts, the NAT traversal methods used are also different. When the two ends of the connection are a combination of port-restricted cone NAT and symmetric NAT, communication connections between different hosts are always achieved through port guessing.

BRIEF SUMMARY

The present application provides communication connection methods, an apparatus, an electronic device, a system, and a readable storage medium, to solve the problem of ensuring device availability and improving the success rate of communication connections in the prior art.

An embodiment of the present application provides a communication connection method, including:

dividing a first idle port number of a network connection device corresponding to a local device into a first selected port number and a first reserved port number based on a first communication connection request initiated by a first client terminal; and

performing a port guessing operation based on the first selected port number, where in case of a successful port guessing, a first communication connection is established between the first client terminal and the local device, and

in case of a failed port guessing, a second communication connection is established between the first client terminal and the local device based on the first reserved port number.

According to an embodiment of the present application, the method further includes:

transmitting a port information acquisition request to the network connection device corresponding to the local device, where the local device is in communication connection with the network connection device, and the network connection device includes a router and/or a switch; and

receiving network port information transmitted from the network connection device, where the network port information includes the first idle port number.

According to an embodiment of the present application, the network port information further includes a port release time parameter, and the port release time parameter includes a release duration of a single network port in the network connection device; and
the method further includes performing a port release operation based on the port release time parameter in case of completing the port guessing operation.

According to an embodiment of the present application, the method further includes:

determining whether a second client terminal is in communication connection with the local device in case that the port release operation is not completed and a second communication connection request initiated by the second client terminal is received; and

establishing a second communication connection between the second client terminal and the local device based on the first reserved port number in case that the second client terminal is not in communication connection with the local device.

According to an embodiment of the present application, the method further includes:

obtaining a second idle port number and the port release time parameter corresponding to the network connection device in case that the port release operation is completed; and

initiating a port guessing request to a target client terminal based on the second idle port number and performing a port guessing operation, where the target client terminal is a client terminal that initiates a communication connection request to the local device for the first time or the latest time;

where in case of a successful port guessing, a first communication connection is established between the target client terminal and the local device, and

in case of a failed port guessing, the port release operation is repeated based on the port release time parameter, and the port guessing operation is repeated after the port release operation is completed.

According to an embodiment of the present application, performing the port guessing operation based on the first selected port number includes:

determining the first selected port number as a first port guessing number corresponding to the local device;

transmitting the first port guessing number to a server, to make the server determine a second port guessing number based on the first port guessing number and a preset port guessing strategy, and transmitting the second port guessing number to the first client terminal, where the second port guessing number represents a network port number in the network connection device to which the first client terminal transmits a second port guess message;

transmitting a first port guessing message to the network port in the network connection device based on the first port guessing number; and

determining the port guessing is successful in case of receiving the second port guessing message or a response message corresponding to the first port guessing message transmitted from the first client terminal, where the response message represents a response message transmitted from the first client terminal after receiving the first port guessing message.

An embodiment of the present application provides a communication connection apparatus, including:

a port division module configured to divide a first idle port number of a network connection device corresponding to a local device into a first selected port number and a first reserved port number based on a first communication connection request initiated by a first client terminal;

a port guessing module configured to perform a port guessing operation based on the first selected port number; where in case of a successful port guessing, a first communication connection is established between the first client terminal and the local device; and

a communication connection module configured to establish a second communication connection between the first client terminal and the local device based on the first reserved port number in case of a failed port guessing.

An embodiment of the present application provides an electronic device, including a memory, a processor, and a computer program stored in the memory and executable in the processor, where the processor implements any of the communication connection methods described above in case of executing the program.
An embodiment of the present application provides a communication connection system, including any of the electronic devices described above, at least two client terminals, a network connection device, and a server,

where the electronic device is connected to the network connection device, and the network connection device is connected to the server; and

the at least two client terminals include a first client terminal and a second client terminal, both of which are connected to the server through the network connection device.

An embodiment of the present application provides a computer-readable storage medium storing a computer program, where the computer program implements any of the communication connection methods described above when executed by a processor.

An embodiment of the present application provides a computer program product including a computer program that implements any of the communication connection methods described above when executed by a processor.

The present application provides communication connection methods, an apparatus, an electronic device, a system, and a readable storage medium. By dividing a first idle port number of a network connection device corresponding to a local device into a first selected port number and a first reserved port number; and performing a port guessing operation based on the first selected port number, in case of a successful port guessing, a first communication connection is established between the first client terminal and the local device, and in case of a failed port guessing, a second communication connection is established between the first client terminal and the local device based on the first reserved port number, i.e., it is ensured that the client terminal may establish a session connection with the local device through the reserved network port.

BRIEF DESCRIPTION OF THE DRAWINGS

FIG. 1 is a first schematic flowchart of a communication connection method according to an embodiment of the present application;

FIG. 2 is a second schematic flowchart of a communication connection method according to an embodiment of the present application;

FIG. 3 is a third schematic flowchart of a communication connection method according to an embodiment of the present application;

FIG. 4 is a fourth schematic flowchart of a communication connection method according to an embodiment of the present application;

FIG. 5 is a fifth schematic flowchart of a communication connection method according to an embodiment of the present application;

FIG. 6 is a schematic structural diagram of a communication connection apparatus according to an embodiment of the present application;

FIG. 7 is a schematic structural diagram of an electronic device according to an embodiment of the present application; and

FIG. 8 is a schematic structural diagram of a communication connection system according to an embodiment of the present application.

DETAILED DESCRIPTION

The solutions in the present application will be described below in conjunction with the accompanying drawings in the present application. The described embodiments are only part of the embodiments of the present application, but not all of the embodiments.

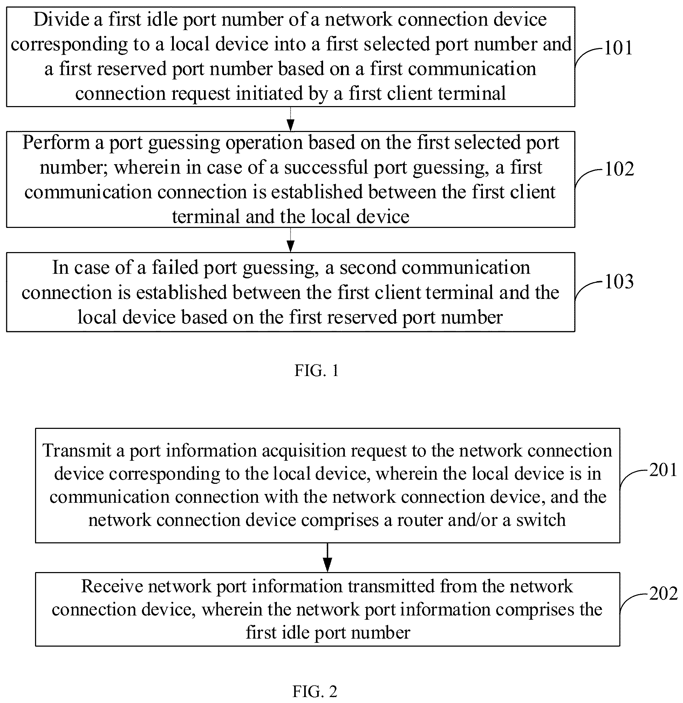

The communication connection method provided in the present application will be described below in conjunction with FIGS. 1 to 5. As shown in FIG. 1, the present application provides a communication connection method, including the following steps.

At step 101, divide a first idle port number of a network connection device corresponding to a local device into a first selected port number and a first reserved port number based on a first communication connection request initiated by a first client terminal.

In an embodiment, the first communication connection request represents a request by the first client terminal to establish a communication connection with the local device, i.e., the first client terminal proactively initiates a communication connection request to the local device. The local device is a monitoring device or another electronic device. For example, the local device is a monitoring device, and the first client terminal is a client terminal used to browse or manage video data collected by the monitoring device.

Furthermore, the sum of the first selected port number and the first reserved port number is the first idle port number. In case that the first idle port number is represented as D, the first selected port number is represented as n, the first reserved port number is represented as n1, where n1=D-n.

Furthermore, the first idle port number represents the port number of currently idle ports of the network connection devices. The port corresponding to the first selected port number is used to perform a port guessing operation to establish the first communication connection between the first client terminal and the local device. In case of a failed port guessing, the port corresponding to the first reserved port number is used to establish a second communication connection between the first client terminal and the local device.

Furthermore, after receiving the first communication connection request initiated by the first client terminal and the requested communication connection type in the first communication connection request is the second communication connection, a second communication connection between the first client terminal and the local device is established based on the idle ports of the network connection device.

At step 102, perform a port guessing operation based on the first selected port number. In a case of a successful port guessing, a first communication connection is established between the first client terminal and the local device

In an embodiment, the first communication connection is a direct communication connection type, including a tunnel communication connection. The tunnel communication connection, also known as a point-to-point tunnel connection, is a communication method where devices are directly connected.

In an embodiment, the port guessing operation represents the operation that both the first client terminal and the local device guesses the network port selected by the other party. Essentially, the port guessing operation is a random collision operation of a communication connection, and the port guessing operation achieves a communication connection under the conditions of different NAT (Network Address Translation) networking types of different hosts, especially the combination of "port restriction cone type" and "symmetric type".

It should be noted that in the first communication connection mode, the first client terminal is in a point-to-point communication with the local device without the need for data forwarding by the server.

At step 103, in case of a failed port guessing, a second communication connection is established between the first client terminal and the local device based on the first reserved port number.

In an embodiment, the second communication connection is an indirect communication connection type, including a distribution communication connection and a forwarding communication connection.

It should be noted that in the second communication connection mode, the first client terminal is not be directly in a point-to-point communication with the local device. For example, in case that the second communication connection is a forwarding communication connection, data forwarding by the server is required to achieve the communication between the two parties.

According to the steps 101 to 103, by dividing a first idle port number of a network connection device corresponding to a local device into a first selected port number and a first reserved port number; and performing a port guessing operation based on the first selected port number, in case of a successful port guessing, a first communication connection is established between the first client terminal and the local device, and in case of a failed port guessing, a second communication connection is established between the first client terminal and the local device based on the first reserved port number, i.e., it is ensured that the client terminal is establish a session connection with the local device through the reserved network port, thereby avoiding that a single client terminal consumes too many ports, resulting in the situation of functions being unavailable, such as the device being offline, frequently being online and offline, and the inability to start live broadcast, and etc.. The technical problem in the prior art of how to ensure the device availability and improve the success rate of communication connection are solved.

Furthermore, the first selected port number is greater than the first reserved port number, to use as many network ports as possible for port guessing while ensuring a sufficient number of reserved network ports to establish session connections, thereby further improving the success rate of the first communication connection.

In one embodiment, in case of receiving a first communication connection request initiated by a first client terminal, and the requested communication connection type in the first communication connection request is a first communication connection type, a first idle port number of the network connection device corresponding to the local device is divided into a first selected port number and a first reserved port number, and steps 102 to 103 are performed.

Furthermore, in the case of receiving a first communication connection request initiated by the first client terminal, and the requested communication connection type in the first communication connection request is a second communication connection type, no further steps are performed, and the second communication connection between the first client terminal and the local device is directly established.

In one embodiment, as shown in FIG. 2, the communication connection method provided by the present application further includes the following steps.

At step 201: send a port information acquisition request to the network connection device corresponding to the local device, where the local device is in communication connection with the network connection device, and the network connection device includes a router and/or a switch.

Furthermore, the local device transmits the port information acquisition request to the corresponding network connection device to obtain the network port information corresponding to the current network connection device. There is a connection relationship between the local device and its corresponding network connection device, the connection relationship may be a wired connection or a wireless connection.

At step 202: receive network port information transmitted from the network connection device, which includes the first idle port number.

Furthermore, the network port information includes the first idle port number of the current network connection device. In case that the local device is in a multi-layer NAT network, the network port information is obtained from the router or switch connected to the local device step by step upward, and the network port information of the network connection device, in the direct link where the local device is located in the network topology, is obtained.

Furthermore, the first idle port number D is the minimum number of idle ports for each node in the direct link where the local device is located, and the port release time parameter T is the maximum value of the port release time parameter for each node in a direct network link where the local device is located.

According to the steps 201 to 202, a port information acquisition request is transmitted to the network connection device corresponding to the local device, to obtain the network port information of the current network connection device in real time, ensuring the timeliness and reliability of the network port information. The port division and port guessing are performed based on the latest network port information to ensure the device availability and improve the success rate of communication connections.

In an embodiment, the network port information further includes a port release time parameter, which includes the release duration of a single network port in the network connection device. The communication connection method provided in the present disclosure further includes following step: performing a port release operation based on the port release time parameter in case that a port guessing operation is completed.

In an embodiment, the target port release duration is determined based on the release duration of the single network port in the port release time parameters and the first selected port number, and the network port of the first selected port number is port-released within the target port release duration. The target port release duration represents the total port release duration of the network ports of the first selected port number.

In the above embodiment, the port release operation is performed based on the port release time parameter in case of completing the port guessing operation, to restore the consumed port resources, and to indicate that the port release operation is currently in progress and the port guessing operation cannot be performed normally. The local device is prompted to establish a session connection with the client terminal based on other communication connection manners to further ensure the device availability and improve the success rate of communication connection.

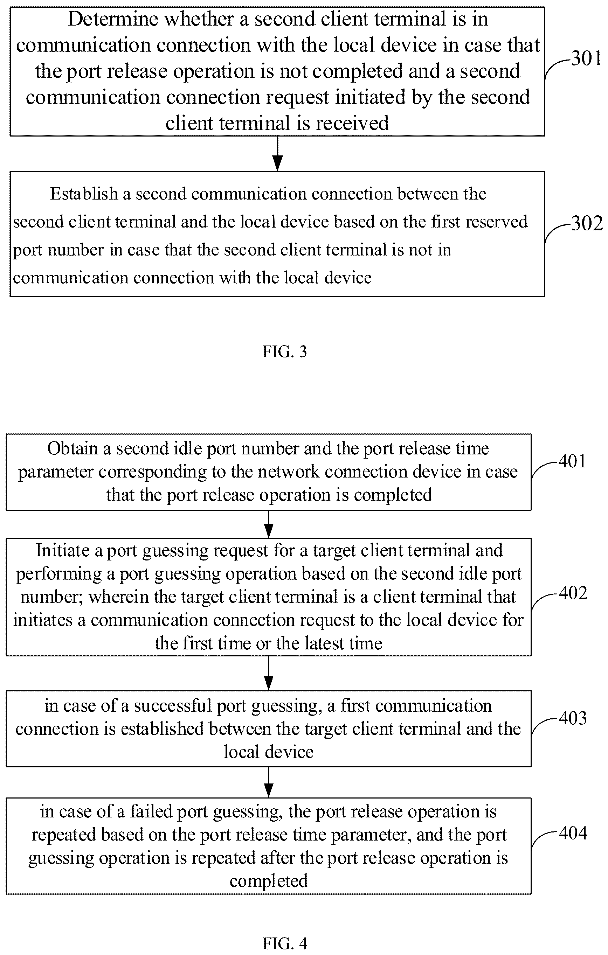

In an embodiment, as shown in FIG. 3, the communication connection method provided by the present application further includes the following steps.

At step 301, determine whether a second client terminal is in communication connection with the local device in case that the port release operation is not completed and a second communication connection request initiated by the second client terminal is received.

In an embodiment, the second client terminal can be the original first client terminal or other client terminals besides the first client terminal.

It should be noted that the original first client terminal may actively disconnect after establishing the second communication connection with the local device for the first time, and then initiate a second communication connection request to the local device again to request the establishment of the first communication connection with the local device. Other client terminals may initiate a second communication connection request to the local device for the first time, to request the establishment of the first communication connection with the local device.

At step 302, establish a second communication connection between the second client terminal and the local device based on the first reserved port number in case that the second client terminal is not in communication connection with the local device.

For example, the first reserved port number is three. On the basis of establishing a second communication connection between the first client terminal and the local device based on the first reserved port, a second communication connection between the second client terminal and the local device may also be established based on the second reserved port. Furthermore, a second communication connection between the third client terminal and the local device may also be established based on the third reserved port.

According to the steps 301 to 302, whether a second client terminal is in communication connection with the local device is determined in case that the port release operation is not completed and a second communication connection request initiated by a second client terminal is received. A second communication connection between the second client terminal and the local device is established based on the first reserved port number in case that there is no communication connection between the second client terminal and the local device. This ensures that all client terminals that initiate communication connection requests to the local device may establish session connections with the local device, thereby avoiding that a single client terminal consumes too many ports, resulting in the situation that other client terminals cannot establish session connections with the local device, and the device availability and the success rate of the communication connection are further improved.

In an embodiment, as shown in FIG. 4, the communication connection method provided by the present application further includes the following steps:

At step 401: obtain a second idle port number and the port release time parameter corresponding to the network connection device in case that the port release operation is completed.

In an embodiment, the second idle port number represents the port number of currently idle ports of the network connection devices after the port release operation is completed.

In an embodiment, the current release waiting duration is obtained, and whether the current release waiting duration is greater than the target port release duration is determined. In case that the current release waiting duration is greater than or equal to the target port release duration, it is determined that the port release operation is completed. The current release waiting duration represents the accumulated waiting duration before the completion of the port release operation, and the current release waiting duration can also be understood as the accumulated duration for performing the port release operation.

In an embodiment, the target port release duration is determined based on the release duration of a single network port in the port release time parameters and the first selected port number. The first selected port number is determined based on the first idle port number of the network connection device.

At step 402: initiate a port guessing request to a target client terminal based on the second idle port number and perform a port guessing operation, where the target client terminal is a client terminal that initiates a communication connection request to the local device for the first time or the latest time.

In an embodiment, "initiate a port guessing request to a target client terminal based on the second idle port number" indicates that the local device reversely initiates a port guessing request to the target client terminal to establish a communication connection between the local device and the target client terminal. " initiate a port guessing request to a target client terminal based on the second idle port number" can also be understood as the local device reversely initiating a second communication connection request to the target client terminal.

It should be noted that the first communication connection request in step 101 represent s that "the first client terminal" proactively initiates a communication connection request to "the local device", while the second communication connection request here indicates a communication connection request reversely initiated by "the local device" to the "target client terminal". Since the positions of the "requester" and "requested party" of the first communication connection request and second communication connection request are interchanged, the first communication connection request can be referred to as a communication connection request "proactively initiated" by the client terminal, while the second communication connection request can be referred to as a communication connection request "reversely initiated" by the local device.

In an embodiment, the step 402 specifically includes the following steps.

(1) Determine the second idle port number as a third port guessing number corresponding to the local device, where the third port guessing number (or the second idle port number) is used to perform the port guessing operation and establish the first communication connection between the target client terminal and the local device.

It should be noted that a sufficient number of idle ports is reserved before the first port guessing operation, to ensure the establishment of session connections between the client terminal and the local device. Therefore, in subsequent port guessing operations, all idle ports corresponding to the second idle port number may be used for port guessing to invest as many network ports as possible in port guessing and further improve the success rate of first communication connections.

(2) Transmit the third port guessing number to the server, so that a fourth port guessing number is determined by the server based on the third port guessing number and the preset port guessing strategy, and the fourth port guessing number is transmitted to the target client terminal. The fourth port guessing number indicates that the number of the target client terminal transmitting a fourth port guessing message to the network port in the network connection device.

(3) Transmit a third port guessing message to the network port in the network connection device based on the third port guessing number.

(4) Determine that the port guessing is successful in case of receiving the fourth port guessing message or the response message corresponding to the third port guessing message transmitted from the target client terminal. The response message represents the response message transmitted from the target client terminal after receiving the third port guessing message.

It should be noted that in case that the local device receives the fourth port guessing message transmitted from the target client terminal, or the target client terminal receives the third port guessing message transmitted from the local device, it can be determined that the local device and the target client terminal transmit the port guessing message to the same network port in the network connection device, and the success of the port guessing is determined .

At step 403, in case of a successful port guessing, a first communication connection is established between the target client terminal and the local device.

Furthermore, the target client terminal is a client terminal that initiates a communication connection request to the local device for the first time or the latest time. For example, the target client terminal is a second client terminal that initiates a communication connection request to the local device for the first time, and the second client terminal here refers to other client terminals besides the first client terminal. The target client terminal is the first client terminal that initiates a communication connection request to the local device for the latest time and the first client terminal has previously initiated a communication connection request to the local device.

Furthermore, "the client terminal that initiates a communication connection request to the local device for the first time" represents a client terminal that has not previously and proactively initiated a communication connection request to the local device, i.e., this is the first communication connection request to the local device initiated by the client terminal.

Furthermore, "the client terminal that initiates a communication connection request to the local device for the latest time" represents a client terminal that has previously initiated at least one communication connection request to the local device, i.e., this is the latest communication connection request to the local device initiated by the client terminal. The total number of communication connection requests initiated by the client terminal to the local device is at least two, including the previous at least one and the latest one (i.e., this time).

At step 404, in case of a failed port guessing, the port release operation is repeated based on the port release time parameter, and the port guessing operation is repeated after the port release operation is completed.

According to the steps 401 to 404, the success rate of port guessing is maximized by reversely initiating the port guessing process to the target client terminal by the local device after the port release is completed, while ensuring network resources. By repeating the port guessing multiple times, the success rate of the first communication connection is further improved.

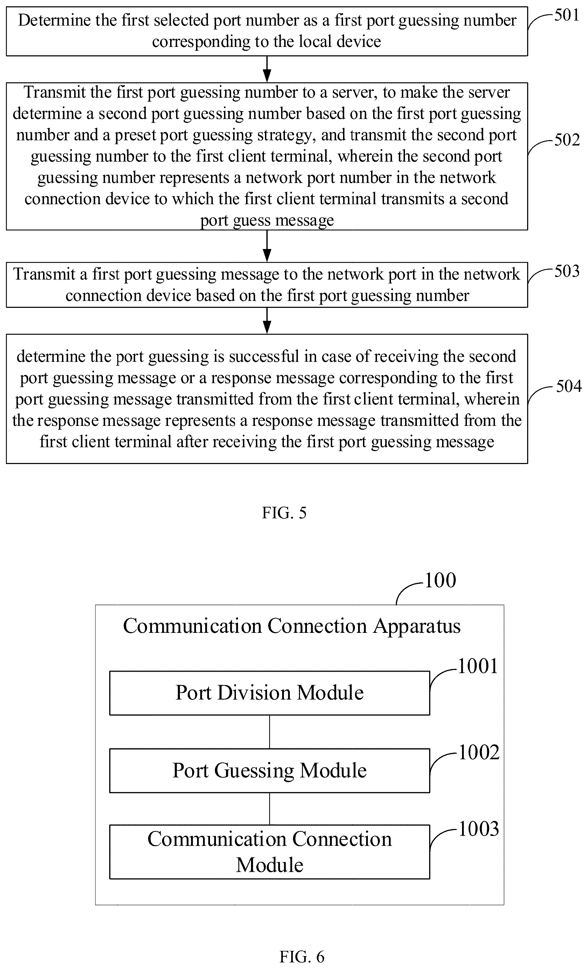

In one embodiment, as shown in FIG. 5, the step of performing the port guessing operation based on the first selected port number in step 102 includes the following steps.

At step 501, determine the first selected port number as the first port guessing number corresponding to the local device.

At step 502, send the first port guessing number to a server to make the server determine a second port guessing number based on the first port guessing number and a preset port guessing strategy, and transmit the second port guessing number to the first client terminal, where the second port guessing number represents a network port number in the network connection device to which the first client terminal transmits a second port guess message.

In an embodiment, the first port guessing number may be represented as n, and the second port guessing number may be represented as m.

In an embodiment, the step 502 includes the following steps.

(1) The local device transmits the first port guessing number n to the server. The server receives the first port guessing number n transmitted from the local device, and obtains the NAT network type corresponding to the first client terminal and the local device through detection.

(2) Select the combination of target numbers with the highest success rate for collision from multiple types of number combinations with different collision probabilities based on the first port guessing number n, corresponding to the local device, in case that the server determines that the NAT networking type combination of the first client terminal and the local device is a combination of "port restricted cone type" and "symmetric type".

Furthermore, in the port restricted cone NAT, all connection requests from the same private network address X (including IP (Internet Protocol) address and port number) will be mapped to the same public network address Y (including IP address and port number), regardless of the target address of the request. Only when the private network address X firstly transmits a request to address Z (including IP address and port number) through the public network address Y, NAT will forward the request, transmitted from Z to Y, to X. Otherwise, the request, transmitted from Z to X, will be considered unauthenticated by NAT and blocked.

Furthermore, in the symmetric NAT, connection requests from the same private network address X will be mapped to different public network addresses (with different port numbers) based on the different target address (including IP address and port number). Only when the private network address X firstly transmits a request to address Z (including IP address and port number) through the public network address Y, NAT will forward the request, transmitted from Z to Y, to X. Otherwise, the request, transmitted from Z to X, will be considered unauthenticated by NAT and blocked.

(3) The server determines the second port guessing number m corresponding to the first client terminal based on the combination of target numbers and the first port guessing number n, and transmits the second port guessing number m to the first client terminal.

For example, in case that the combination of target numbers is n:m=3:5, and the first port guessing number n is 300, and it can be determined that the second port guessing number m is 500.

Furthermore, the success rate for collision corresponding to the combination of target numbers may be represented by the following formula (1).

$$T=1-[(1-m/65536)*(1-m/(65536-1))\cdots(1-m/(65536-n+1))]\ (1)$$

In an embodiment, the number combination is n:m. The first port guessing number $n \leq 65536$. The second port guessing number $m \leq 65536$. The success rate for collision corresponding to each number combination is T. In case that the first port guessing number n is determined, the success rate for collision T varies according to the value of the second port guessing number m. The combination with the highest success rate for collision T is selected as the combination of target numbers.

(4) The first client terminal receives the second port guessing number m transmitted from the server and transmits a second port guessing message to the network port in the network connection device based on the second port guessing number m. The number of the second port guessing message is the second port guessing number m.

At step 503, send the first port guessing message to the network port in the network connection device based on the first port guessing number.

In an embodiment, the number of the first port guessing message is the first port guessing number n.

At step 504, determine that the port guessing is successful in case of receiving the second port guessing message or a response message corresponding to the first port guessing message transmitted from the first client terminal. The response message represents a response message transmitted from the first client terminal after receiving the first port guessing message.

It should be noted that in case that the local device receives the second port guessing message transmitted from the first client terminal, or the first client terminal receives the first port guessing message transmitted from the local device, it can be determined that the local device and the first client terminal transmit the port guessing message to the same network port in the network connection device, thereby determining the success of the port guess. The specific port guessing process is a mature technical solution; therefore, it will not be repeated in the present application.

The communication connection method provided in the present application has at least the following advantages.

(1) During the first port guessing, the port guessing is performed after a reasonable allocation of port resources. In case that the port guessing fails, the port resources are subsequently restored, and multiple port guessing can be made on the basis of ensuring existing connections to improve the success rate of tunnel connections.

(2) By dividing the currently idle port number in the direct network connected to the local device into the first selected port number and the first reserved port number, performing a port guessing based on the first selected port number, and performing a second communication connection based on the first reserved port number, excessive consumption of network ports is avoided.

(3) The local device performs a port release operation for the network port involved in the port guessing based on the port release time parameter, and restores port resources in a timely manner. The optimal port guessing solution is determined based on the NAT networking type of the client terminal and the local device as well as the corresponding first port guessing number of the local device, and the second port guessing number in the optimal port guessing process is transmitted to the corresponding client terminal to further improve the success rate of the first communication connection.

(4) The success rate of port guessing is maximized by reversely initiating the port guessing process to the client terminal by the local device after the port release is completed, while ensuring network resources. By repeating the port guessing multiple times, the success rate of the first communication connection is further improved.

The communication connection apparatus provided by the present application is described below. The communication connection apparatus described below can be referred to in correspondence with the communication connection method described above.

As shown in FIG. 6, the present application provides a communication connection apparatus, where the communication connection apparatus 100 includes:

a port division module 1001 configured to divide a first idle port number of a network connection device corresponding to a local device into a first selected port number and a first reserved port number based on a first communication connection request initiated by a first client terminal;

a port guessing module 1002 configured to perform a port guessing operation based on the first selected port number, where in case of a successful port guessing, a first communication connection is established between the first client terminal and the local device; and

a communication connection module 1003 configured to establish a second communication connection between the first client terminal and the local device based on the first reserved port number in case of a failed port guessing.

In an embodiment, the communication connection apparatus 100 further includes a port information acquisition module, where the port information acquisition module is configured to: transmit a port information acquisition request to the network connection device corresponding to the local device, where the local device is in communication connection with the network connection device, and the network connection device includes a router and/or a switch; and receive network port information transmitted from the network connection device, where the network port information includes the first idle port number.

In an embodiment, the network port information further includes a port release time parameter, and the port release time parameter includes a release time duration of a single network port in the network connection device. The communication connection apparatus 100 further includes a port release module configured to perform a port release operation based on the port release time parameters in case of completing the port guessing operation.

In an embodiment, the communication connection apparatus 100 further includes a forwarding connection module, where the forwarding connection module is configured to determine whether a second client terminal is in communication connection with the local device in case that the port release operation is not completed and a second communication connection request initiated by the second client terminal is received, and establish a second communication connection between the second client terminal and the local device based on the first reserved port number in case that the second client terminal is not in communication connection with the local device.

In an embodiment, the port guessing module 1002 is further configured to obtain a second idle port number and the port release time parameter corresponding to the network connection device in case that the port release operation is completed, and initiate a port guessing request to a target client terminal based on the second idle port number and performing a port guessing operation, where the target client terminal is a client terminal that initiates a communication connection request to the local device for the first time or the latest time; where in case of a successful port guessing, a first communication connection is established between the target client terminal and the local device, and in case of a failed port guessing, the port release operation is repeated based on the port release time parameter, and the port guessing operation is repeated after the port release operation is completed.

In one embodiment, the port guessing module 1002 is further configured to: determine the first selected port number as a first port guessing number corresponding to the local device; transmit the first port guessing number to a server, to make the server determine a second port guessing number based on the first port guessing number and a preset port guessing strategy, and transmit the second port guessing number to the first client terminal, where the second port guessing number represents a network port number in the network connection device to which the first client terminal transmits a second port guess message; transmit a first port guessing message to the network port in the network connection device based on the first port guessing number; and determine the port guessing is successful in case of receiving the second port guessing message or a response message corresponding to the first port guessing message transmitted from the first client terminal, where the response message represents a response message transmitted from the first client terminal after receiving the first port guessing message.

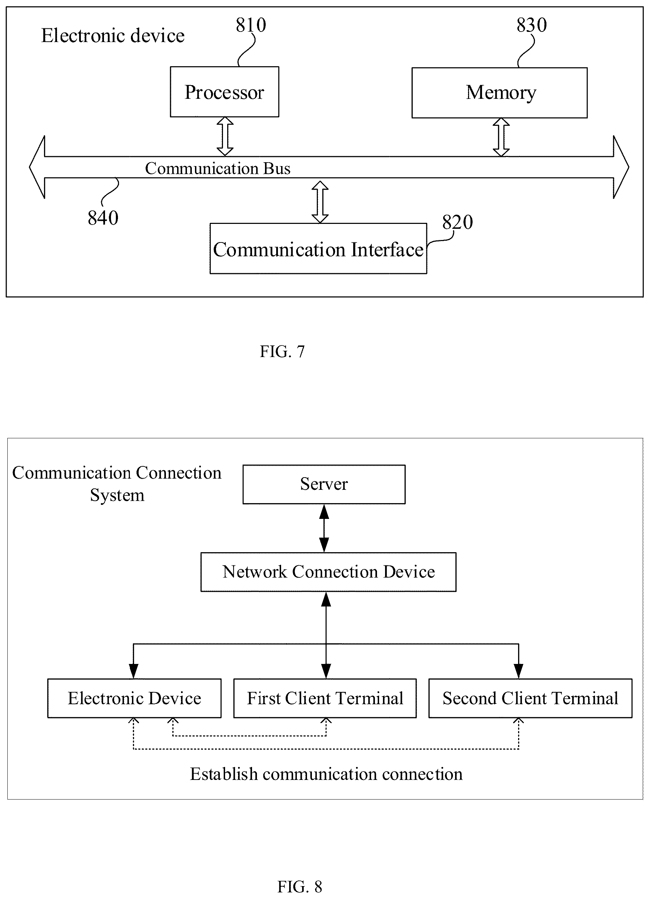

A schematic structural diagram of an electronic device is shown in FIG. 7. As shown in FIG. 7, the electronic device may include a processor 810, a communication interface 820, a memory 830, and a communication bus 840. The processor 810, the communication interface 820, and the memory 830 communicate with each other through the communication bus 840. The processor 810 can call the logical instructions in the memory 830 to execute the communication connection method provided by each of the above methods. The method includes: dividing a first idle port number of a network connection device corresponding to a local device into a first selected port number and a first reserved port number based on a first communication connection request initiated by a first client terminal; and performing a port guessing operation based on the first selected port number. In case of a successful port guessing, a first communication connection is established between the first client terminal and the local device, and in case of a failed port guessing, a second communication connection is established between the first client terminal and the local device based on the first reserved port number.

In addition, the logical instructions in the above memory 830 are implemented in the form of a software functional unit, and sold or used as an independent product, it can be stored in a computer-readable storage medium. Based on the understanding, the solution of the present application, or the part that contributes to the related art, or all or part of the solution, can be embodied in the form of a software product. The computer software product is stored in a storage medium and includes several instructions allowing a computer device (which can be a personal computer, a server, or a network device, etc.) to execute all or part of the steps of the method described in each embodiment of the present application. The above storage medium includes a USB flash drive, a mobile hard disk, a read-only memory (ROM), a random-access memory (RAM), a disk or optical disk, and other media that can store program codes.

As shown in FIG. 8, the present application also provides a communication connection system, including: the electronic device as provided in each of the above embodiments, at least two client terminals, a network connection device, and a server,

where the electronic device is connected to the network connection device, and the network connection device is connected to the server, where network connection devices include routers and/or switches; and

the at least two client terminals include a first client terminal and a second client terminal (only the first client terminal and the second client terminal are shown in FIG. 8), and both of which are connected to the server through the network connection device.

On the other hand, the present application also provides a computer program product including a computer program that can be stored in a non-transitory computer-readable storage medium. The computer can perform the communication connection method provided by each of the above methods in case that the computer program is executed by a processor. The method includes: dividing a first idle port number of a network connection device corresponding to a local device into a first selected port number and a first reserved port number based on a first communication connection request initiated by a first client terminal; and performing a port guessing operation based on the first selected port number; where in case of a successful port guessing, a first communication connection is established between the first client terminal and the local device, and in case of a failed port guessing, a second communication connection is established between the first client terminal and the local device based on the first reserved port number.

On the other hand, the present application also provides a non-transitory computer-readable storage medium on which a computer program is stored. In case that the computer program is executed by a processor, it implements and performs the communication connection method provided by each of the above methods. The method includes: dividing a first idle port number of a network connection device corresponding to a local device into a first selected port number and a first reserved port number based on a first communication connection request initiated by a first client terminal; and performing a port guessing operation based on the first selected port number, where in case of a successful port guessing, a first communication connection is established between the first client terminal and the local device, and in case of a failed port guessing, a second communication connection is established between the first client terminal and the local device based on the first reserved port number.

The devices in the embodiments described above are merely illustrative. A unit described as a separate component may or may not be physically separate, and a component shown as a unit may or may not be a physical unit. That is, they may be located in one location or distributed across multiple network units. Some or all of the modules may be selected according to actual needs to achieve the purpose of the embodiment according to the present application. The skilled in the art can understand and implement the present application without creative effort.

Through the description of the above embodiments, the skilled in the art can clearly understand that each embodiment can be implemented by means of software plus a necessary general hardware platform, or, of course, hardware. Based on this understanding, the above solution, or the part that contributes to the related art, can be embodied in the form of a software product. The computer software product can be stored in a non-transitory computer-readable storage medium, such as ROM/RAM, a disk, optical disk, etc., and includes several instructions allowing a computer device (the computer device can be a personal computer, a server, or a network device, etc.) to implement the methods of each embodiment or certain parts of the embodiment.

Finally, it should be noted that the above embodiments are only used to illustrate the solutions of the present application, but are not limited thereto. Although the present application has been described in detail with reference to the above embodiments, the skilled in the art should understand that they can still modify the solutions described in each of the above embodiments, or replace some of the technical features therein with equivalents. However, the modifications or replacements do not deviate the essence of the corresponding solutions from the scope of the solutions of each embodiment of the present application.

**Claims**

1.  A communication connection method, comprising:

    dividing a first idle port number of a network connection device corresponding to a local device into a first selected port number and a first reserved port number based on a first communication connection request initiated by a first client terminal; and
    performing a port guessing operation based on the first selected port number; wherein in case of a successful port guessing, a first communication connection is established between the first client terminal and the local device, and
    in case of a failed port guessing, a second communication connection is established between the first client terminal and the local device based on the first reserved port number.

2.  The communication connection method of claim 1, further comprising:

    transmitting a port information acquisition request to the network connection device corresponding to the local device, wherein the local device is in communication connection with the network connection device, and the network connection device comprises a router and/or a switch; and
    receiving network port information transmitted from the network connection device, wherein the network port information comprises the first idle port number.

3.  The communication connection method of claim 2, wherein the network port information further comprises a port release time parameter, and the port release time parameter comprises a release duration of a single network port in the network connection device; and
    the method further comprises performing a port release operation based on the port release time parameter in case of completing the port guessing operation.

4.  The communication connection method of claim 3, further comprising:

    determining whether a second client terminal is in communication connection with the local device in case that the port release operation is not completed and a second communication connection request initiated by the second client terminal is received; and
    establishing a second communication connection between the second client terminal and the local device based on the first reserved port number in case that the second client terminal is not in communication connection with the local device.

5.  The communication connection method of claim 3, further comprising:

    obtaining a second idle port number and the port release time parameter corresponding to the network connection device in case that the port release operation is completed; and
    initiating a port guessing request to a target client terminal based on the second idle port number and performing a port guessing operation, wherein the target client terminal is a client terminal that initiates a communication connection request to the local device for the first time or the latest time;
    wherein in case of a successful port guessing, a first communication connection is established between the target client terminal and the local device, and
    in a case of a failed port guessing, the port release operation is repeated based on the port release time parameter, and the port guessing operation is repeated after the port release operation is completed.

6.  The communication connection method of any of claims 1 to 5, wherein performing the port guessing operation based on the first selected port number comprises:

    determining the first selected port number as a first port guessing number corresponding to the local device;
    transmitting the first port guessing number to a server, to make the server determine a second port guessing number based on the first port guessing number and a preset port guessing strategy, and transmitting the second port guessing number to the first client terminal, wherein the second port guessing number represents a network port number in the network connection device to which the first client terminal transmits a second port guess message;

transmitting a first port guessing message to the network port in the network connection device based on the first port guessing number; and

determining the port guessing is successful in case of receiving the second port guessing message or a response message corresponding to the first port guessing message transmitted from the first client terminal, wherein the response message represents a response message transmitted from the first client terminal after receiving the first port guessing message.

7. A communication connection apparatus, comprising:

a port division module configured to divide a first idle port number of a network connection device corresponding to a local device into a first selected port number and a first reserved port number based on a first communication connection request initiated by a first client terminal;

a port guessing module configured to perform a port guessing operation based on the first selected port number; wherein in case of a successful port guessing, a first communication connection is established between the first client terminal and the local device; and

a communication connection module configured to establish a second communication connection between the first client terminal and the local device based on the first reserved port number in case of a failed port guessing.

8. An electronic device, comprising a memory, a processor, and a computer program stored in the memory and executable in the processor, wherein the processor implements the communication connection method of any of claims 1 to 6 in case of executing the program.

9. A communication connection system comprising: an electronic device of claim 8, at least two client terminals, a network connection device, and a server, wherein

the electronic device is connected to the network connection device, and the network connection device is connected to the server; and

the at least two client terminals comprise a first client terminal and a second client terminal, both of which are connected to the server through the network connection device.

10. A non-transitory computer-readable storage medium storing a computer program, wherein the computer program implements the communication connection method of any of claims 1 to 6 when executed by a processor.

Divide a first idle port number of a network connection device corresponding to a local device into a first selected port number and a first reserved port number based on a first communication connection request initiated by a first client terminal

~101

Perform a port guessing operation based on the first selected port number; wherein in case of a successful port guessing, a first communication connection is established between the first client terminal and the local device

~102

In case of a failed port guessing, a second communication connection is established between the first client terminal and the local device based on the first reserved port number

~103

FIG. 1

Transmit a port information acquisition request to the network connection device corresponding to the local device, wherein the local device is in communication connection with the network connection device, and the network connection device comprises a router and/or a switch

~201

Receive network port information transmitted from the network connection device, wherein the network port information comprises the first idle port number

~202

FIG. 2

Determine whether a second client terminal is in communication connection with the local device in case that the port release operation is not completed and a second communication connection request initiated by the second client terminal is received ⌐301

Establish a second communication connection between the second client terminal and the local device based on the first reserved port number in case that the second client terminal is not in communication connection with the local device ⌐302

FIG. 3

Obtain a second idle port number and the port release time parameter corresponding to the network connection device in case that the port release operation is completed ⌐401

Initiate a port guessing request for a target client terminal and performing a port guessing operation based on the second idle port number; wherein the target client terminal is a client terminal that initiates a communication connection request to the local device for the first time or the latest time ⌐402

in case of a successful port guessing, a first communication connection is established between the target client terminal and the local device ⌐403

in case of a failed port guessing, the port release operation is repeated based on the port release time parameter, and the port guessing operation is repeated after the port release operation is completed ⌐404

FIG. 4

Determine the first selected port number as a first port guessing number corresponding to the local device ⌐501

Transmit the first port guessing number to a server, to make the server determine a second port guessing number based on the first port guessing number and a preset port guessing strategy, and transmit the second port guessing number to the first client terminal, wherein the second port guessing number represents a network port number in the network connection device to which the first client terminal transmits a second port guess message ⌐502

Transmit a first port guessing message to the network port in the network connection device based on the first port guessing number ⌐503

determine the port guessing is successful in case of receiving the second port guessing message or a response message corresponding to the first port guessing message transmitted from the first client terminal, wherein the response message represents a response message transmitted from the first client terminal after receiving the first port guessing message ⌐504

FIG. 5

⌐100

Communication Connection Apparatus

Port Division Module ⌐1001

Port Guessing Module ⌐1002

Communication Connection Module ⌐1003

FIG. 6

Electronic device  810                                    830

Processor                    Memory

Communication Bus

840

Communication Interface  820

FIG. 7

Communication Connection
System                          Server

Network Connection Device

Electronic Device    First Client Terminal    Second Client Terminal

Establish communication connection

FIG. 8

## INTERNATIONAL SEARCH REPORT

| International application No. |
| --- |
| **PCT/CN2023/139474** |

| A. | CLASSIFICATION OF SUBJECT MATTER |
| --- | --- |
| | H04L61/2503(2022.01)i |

According to International Patent Classification (IPC) or to both national classification and IPC

| B. | FIELDS SEARCHED |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, ENTXT, ENTXTC, VEN: 端口, 猜测, 穿透, 穿越, 打洞, 端口, 协商, 成功, 失败, 服务器. 路由器, 网关, 选择, NAT, p2p, port, server, router, gateway, guess, negotiate, succeed, failed, traversin

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 109274735 A (TENCENT TECHNOLOGY (SHENZHEN) CO., LTD.) 25 January 2019 (2019-01-25) description, paragraphs 0080-0104 | 1-10 |
| X | CN 105141711 A (BEIJING XITONG NETWORK TECHNOLOGY CO., LTD.) 09 December 2015 (2015-12-09) description, paragraphs 0035-0063 | 1-10 |
| X | CN 115941641 A (GUANGZHOU AVA ELECTRONIC TECHNOLOGY CO., LTD.) 07 April 2023 (2023-04-07) description, paragraphs 0050-0078 | 1-10 |
| A | CN 107580082 A (BEIJING QIYI CENTURY SCIENCE & TECHNOLOGY CO., LTD.) 12 January 2018 (2018-01-12) entire document | 1-10 |
| A | CN 115914164 A (ZHEJIANG UNIVIEW TECHNOLOGIES CO., LTD.) 04 April 2023 (2023-04-04) entire document | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 February 2024** | **29 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/139474** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2023030300 A1 (HUAWEI TECHNOLOGIES CO., LTD.) 09 March 2023 (2023-03-09) entire document | 1-10 |

Form PCT/ISA/210 (second sheet) (July 2022)

**INTERNATIONAL SEARCH REPORT**
Information on patent family members

International application No.

**PCT/CN2023/139474**

| Patent document cited in search report | | | Publication date (day/month/year) | Patent family member(s) | | | Publication date (day/month/year) |
|---|---|---|---|---|---|---|---|
| CN | 109274735 | A | 25 January 2019 | None | | | |
| CN | 105141711 | A | 09 December 2015 | None | | | |
| CN | 115941641 | A | 07 April 2023 | None | | | |
| CN | 107580082 | A | 12 January 2018 | None | | | |
| CN | 115914164 | A | 04 April 2023 | None | | | |
| WO | 2023030300 | A1 | 09 March 2023 | CN | 115766652 | A | 07 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310411853